# EUROPEAN PATENT APPLICATION

(11) **EP 4 708 954 A1**
(43) Date of publication of application: **11.03.2026**
(21) Application number: 23935941.7
(22) Date of filing: 05.05.2023
(51) Int. Cl.: H04W 24/10

(54) **COMMUNICATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/092361
(87) International publication number: WO 2024/229612

(57) **Abstract**

Provided in the present disclosure are a communication method, apparatus and device, and a storage medium. The method comprises: meeting a first condition, and triggering first information, wherein the first information is used for requesting uplink resources; and meeting a second condition, and canceling the first information. The method disclosed in the present disclosure ensures successful reporting of a continuous LBT failure report.

## Description

### TECHNICAL FIELD

The disclosure relates to the field of communication technologies, and in particular to a communication method and apparatus, a communication device, a communication system, and a storage medium.

### BACKGROUND

In a communication system, a resource of a terminal often triggers a consistent Listen-Before-Talk (LBT) failure. Optionally, when the resource of the terminal triggers the consistent LBT failure, the terminal is usually required to report a consistent LBT failure report.

### SUMMARY

The present disclosure provides a communication method and apparatus, a communication device, a communication system, and a storage medium.

According to a first aspect of embodiments of the present disclosure, a communication method is proposed. The method includes:
triggering first information in response to meeting a first condition, wherein the first information is used to request an uplink resource; or
cancelling the first information in response to meeting a second condition.

According to a second aspect of embodiments of the present disclosure, a communication method is proposed. The method includes:
receiving first information, where the first information is used to request an uplink resource.

According to a third aspect of embodiments of the present disclosure, a communication method is proposed. The method includes:
triggering, by a terminal, first information, in response to meeting a first condition, where the first information is used to request an uplink resource;
receiving, by a network device, the first information.
cancelling, by the terminal, the first information in response to meeting a second condition.

According to a fourth aspect of embodiments of the present disclosure, a first communication apparatus is proposed. The apparatus includes:
a processing module, configured to trigger first information in response to meeting a first condition, where the first information is used to request an uplink resource;
the processing module being further configured to cancel the first information in response to meeting a second condition.

According to a fifth aspect of embodiments of the present disclosure, a second communication apparatus is proposed. The apparatus includes:
a receiving module, configured to receive first information, where the first information is used to request an uplink resource.

According to a sixth aspect of embodiments of the present disclosure, a communication device is proposed. The device includes:
at least one processor.

The at least one processor is configured to call instructions to enable the communication device to perform the communication method according to any one of the first aspect or the second aspect.

According to a seventh aspect of embodiments of the present disclosure, a communication system is proposed. The system includes a terminal and a network device. The terminal is configured to implement the communication method described in the first aspect, and the network device is configured to implement the communication method described in the second aspect.

According to an eighth aspect of embodiments of the present disclosure, a storage medium is proposed. The storage medium stores instructions. When the instructions are executed on a communication device, the communication device executes the communication method as described in any one of the first or second aspect.

### BRIEF DESCRIPTION OF THE DRAWINGS

The above and/or additional aspects and advantages of the present disclosure will become apparent and readily understood from the following description of the embodiments in combination with the accompanying drawings.
FIG. 1 is a schematic diagram of an architecture of some communication systems provided by an embodiment of the present disclosure.
FIG. 2A-2B are interactive diagrams of communication methods provided by embodiments of the present disclosure.
FIG. 3A-3C are flowcharts of communication methods provided by other embodiments of the present disclosure.
FIG. 4A-4B are flowcharts of communication methods provided by yet other embodiments of the present disclosure.
FIG. 5 is a flow chart of a communication method provided by yet another embodiment of the present disclosure.
FIG. 6A is a schematic structural diagram of a first communication apparatus provided by an embodiment of the present disclosure.
FIG. 6B is a schematic structural diagram of a first communication apparatus provided by an embodiment of the present disclosure.
FIG. 7A is a schematic structural diagram of a communication device provided by an embodiment of the present disclosure.
FIG. 7B is a schematic structural diagram of a chip provided by an embodiment of the present disclosure.

### DETAILED DESCRIPTION

The method of the present disclosure can be used to solve a technical problem of "how to successfully report a consistent LBT failure report".

Embodiments of the present disclosure provide a communication method and apparatus, a communication device, a communication system, and a storage medium.

In a first aspect, embodiments of the present disclosure provide a communication method. The method includes:
triggering first information in response to meeting a first condition, where the first information is used to request an uplink resource;
cancelling the first information in response to meeting a second condition.

In the above embodiments, the terminal performs at least one of the two steps of triggering the first information in response to meeting the first condition, and cancelling the first information in response to meeting the second condition. It can be seen that in the embodiments of the present disclosure, a triggering condition and a cancelling condition of the first information are defined, and a triggering time and an end time of the process of the terminal requesting the uplink resource are specified, so that the terminal can know when to trigger the first information to request the uplink resource and when to cancel the first information to cancel the request for the uplink resource, ensuring that the terminal can successfully execute the uplink resource request procedure, and ensuring that the terminal can successfully request the uplink resource, so that the terminal can use the requested uplink resource to report the consistent LBT failure report, ensuring the successful reporting of the consistent LBT failure report.

In combination with some embodiments of the first aspect, in some embodiments, after the triggering first information, the method further includes:
sending the first information.

In the above embodiments, after the terminal triggers the first information, the first information is sent, so that the network device can successfully receive the first information and can successfully schedule the uplink resource to the terminal based on the first information, and in this way the terminal can successfully request the uplink resource. The terminal can then use the requested uplink resource to report the consistent LBT failure report, ensuring the successful reporting of the consistent LBT failure report.

In combination with some embodiments of the first aspect, in some embodiments, the first condition includes at least one of:
the terminal detecting that at least one first resource triggers a sidelink (SL) consistent listen-before-talk (LBT) failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is a network device allocates a resource to the terminal;
the terminal being in a second mode and being in a radio resource control (RRC) connected state, where the second mode is the terminal autonomously determines a resource.

In the above embodiments, the specific content of the first condition is limited, and the triggering time of the uplink resource request procedure is clarified, so that the terminal can know when to trigger the first information to request the uplink resource, ensuring that the terminal can successfully request the uplink resource, so that the terminal can use the requested uplink resource to report the consistent LBT failure report, ensuring the successful reporting of the consistent LBT failure report.

In combination with some embodiments of the first aspect, in some embodiments, the second condition includes at least one of:
the second information being sent successfully, where the second information indicates that the at least one first resource triggers the SL consistent LBT failure; or
the SL consistent LBT failure triggered by the at least one first resource being cancelled.

In the above embodiments, the specific content of the second condition is limited, and the end time of the uplink resource request procedure is clarified, so that the terminal can know when to cancel the first information to stop requesting the uplink resource, ensuring that the terminal can successfully stop the uplink resource request procedure, avoiding unlimited execution of the uplink resource request procedure, and preventing waste of resources.

In combination with some embodiments of the first aspect, in some embodiments, triggering the first information includes:
triggering corresponding first information respectively for at least one first resource meeting the first condition.

In the above embodiments, for each first resource that meets the first condition, the terminal independently triggers the first information. It can be seen that in the embodiments of the present disclosure, for each first resource that meets the first condition, the uplink resource request procedure is independently triggered, which can prevent mutual interference between the uplink resource request procedures of different first resources and improve the robustness of the uplink resource request procedure.

In combination with some embodiments of the first aspect, in some embodiments, cancelling the first information includes:
cancelling the corresponding first information triggered by a first resource meeting the second condition.

In the above embodiments, for each first resource that meets the second condition, the terminal independently cancels the first information. It can be seen that in the embodiments of the present disclosure, for each first resource that meets the second condition, the uplink resource request procedure previously triggered correspondingly is stopped independently, which can prevent mutual interference between the uplink resource request procedures of different first resources and improve the robustness of the uplink resource request procedure.

In combination with some embodiments of the first aspect, in some embodiments, sending the first information includes:
sending the corresponding first information respectively triggered by the at least one first resource.

In the above embodiments, the terminal independently sends the first information triggered by each first resource. It can be seen that in the embodiments of the present disclosure, the uplink resource request procedure is independently executed for each first resource that triggers the first information, which can prevent mutual interference between the uplink resource request procedures of different first resources and improve the robustness of the uplink resource request procedure.

In combination with some embodiments of the first aspect, in some embodiments, the method further includes:
starting a first timer, where the first timer is a timer associated with the first information, and the first information is prohibited from being sent during a running state of the first timer.

In the above embodiments, since the first information is prohibited from being sent when the first timer is started, by executing the step of starting the first timer after the terminal sends the first information, the first information can be prevented from being frequently sent in a short time period, thereby saving resources.

In combination with some embodiments of the first aspect, in some embodiments, after canceling the first information, the method further includes:
stopping a first timer in a running state, where the first timer is a timer associated with the first information, and the first information is prohibited from being sent during the running state of the first timer.

In the above embodiments, after the terminal cancels the first information, if the first timer associated with the first information is in the running state, the first timer is stopped. Since the first information is prohibited from being sent when the first timer is started, the first timer associated with the canceled first information is stopped to ensure that when the terminal triggers the first information again, the re-triggered first information can be successfully sent, thereby ensuring that the terminal can successfully request the uplink resource subsequently, so that the terminal can use the requested uplink resource to report the consistent LBT failure report, thereby ensuring the successful reporting of the consistent LBT failure report.

In combination with some embodiments of the first aspect, in some embodiments, the first resource is used by the terminal for an SL communication.

In combination with some embodiments of the first aspect, in some embodiments, the first resource includes at least one of a resource block (RB) set, a bandwidth part (BWP), or a resource pool.

In combination with some embodiments of the first aspect, in some embodiments, the first information is a scheduling request (SR).

In combination with some embodiments of the first aspect, in some embodiments, the second information is a media access control control element (MAC CE), and the second information is carried by a media access control protocol data unit (MAC PDU).

In combination with some embodiments of the first aspect, in some embodiments, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

In a second aspect, embodiments of the present disclosure provide a communication method. The method includes:
receiving first information, where the first information is used to request an uplink resource, the first information is triggered by a terminal, and a triggering condition of the first information is meeting a first condition.

In the above embodiments, the network device will receive the first information, which is used to request the uplink resource. The network device can then schedule the uplink resource to the terminal based on the received first information, so that the terminal can use the uplink resource to report the consistent LBT failure report, thereby ensuring the successful reporting of the consistent LBT failure report.

In combination with some embodiments of the second aspect, in some embodiments, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, wherein the first mode is the network device allocates a resource to the terminal; or
the terminal being in a second mode and being in an RRC connected state, where the second mode is the terminal autonomously determines a resource.

In combination with some embodiments of the second aspect, in some embodiments, the first resource is used by the terminal for an SL communication.

In combination with some embodiments of the second aspect, in some embodiments, the first resource includes at least one of a RB set, a BWP, or a resource pool.

In combination with some embodiments of the second aspect, in some embodiments, the first information is an SR.

In combination with some embodiments of the second aspect, in some embodiments, the second information is an MAC CE, and the second information is carried by an MAC PDU.

In combination with some embodiments of the second aspect, in some embodiments, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

In a third aspect, embodiments of the present disclosure provide a communication method. The method includes:
triggering, by a terminal, first information, in response to meeting a first condition, where the first information is used to request an uplink resource;
cancelling, by the terminal, the first information in response to meeting a second condition.

In combination with some embodiments of the third aspect, in some embodiments, after the terminal triggers the first information, the method further includes:
sending, by the terminal, the first information to a network device.

In combination with some embodiments of the third aspect, in some embodiments, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is the network device allocates a resource to the terminal; or
the terminal being in a second mode and being in an RRC connected state, where the second mode is the terminal autonomously determines a resource.

In combination with some embodiments of the third aspect, in some embodiments, the second condition includes at least one of:
the second information being sent successfully, where the second information indicates that the at least one first resource triggers the SL consistent LBT failure; or
the SL consistent LBT failure triggered by the at least one first resource being cancelled.

In combination with some embodiments of the third aspect, in some embodiments, triggering by the terminal the first information includes:
triggering by the terminal corresponding first information respectively for at least one first resource meeting the first condition.

In combination with some embodiments of the third aspect, in some embodiments, canceling by the terminal the first information includes:
cancelling the corresponding first information triggered by a first resource meeting the second condition.

In combination with some embodiments of the third aspect, in some embodiments, sending by the terminal the first information includes:
sending by the terminal the corresponding first information respectively triggered by the at least one first resource.

In combination with some embodiments of the third aspect, in some embodiments, the method further includes:
starting by the terminal a first timer, where the first timer is a timer associated with the first information, and the first information is prohibited from being sent during a running state of the first timer.

In combination with some embodiments of the third aspect, in some embodiments, after the terminal cancels the first information, the method further includes:
stopping a first timer in a running state, where the first timer is a timer associated with the first information, and the first information is prohibited from being sent during the running state of the first timer.

In combination with some embodiments of the third aspect, in some embodiments, the first resource is used by the terminal for an SL communication.

In combination with some embodiments of the third aspect, in some embodiments, the first resource includes at least one of a RB set, a BWP, or a resource pool.

In combination with some embodiments of the third aspect, in some embodiments, the first information is an SR.

In combination with some embodiments of the third aspect, in some embodiments, the second information is an MAC CE, and the second information is carried by an MAC PDU.

In combination with some embodiments of the third aspect, in some embodiments, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

In a fourth aspect, embodiments of the present disclosure provide a first communication apparatus. The apparatus includes:
a processing module, configured to trigger first information in response to meeting a first condition, where the first information is used to request an uplink resource; and
the processing module being further configured to cancel the first information in response to meeting a second condition.

In combination with some embodiments of the fourth aspect, in some embodiments, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, wherein the first mode is a network device allocates a resource to the terminal; or
the terminal being in a second mode and being in an RRC connected state, where the second mode is the terminal autonomously determines a resource.

In combination with some embodiments of the fourth aspect, in some embodiments, the second condition includes at least one of:
the second information being sent successfully, where the second information indicates that the at least one first resource triggers the SL consistent LBT failure; or
the SL consistent LBT failure triggered by the at least one first resource being cancelled.

In combination with some embodiments of the fourth aspect, in some embodiments, the processing module is further configured to:
trigger corresponding first information respectively for at least one first resource meeting the first condition.

In combination with some embodiments of the fourth aspect, in some embodiments, the processing module is further configured to:
cancel the corresponding first information triggered by a first resource meeting the second condition.

In combination with some embodiments of the fourth aspect, in some embodiments, after the triggering first information, the apparatus is further configured to:
send the first information.

In combination with some embodiments of the fourth aspect, in some embodiments, the apparatus is further configured to:
send the corresponding first information respectively triggered by the at least one first resource.

In combination with some embodiments of the fourth aspect, in some embodiments, the apparatus is further configured to:
start a first timer, where the first timer is a timer associated with the first information, and the first information is prohibited from being sent during a running state of the first timer.

In combination with some embodiments of the fourth aspect, in some embodiments, after cancelling the first information, the apparatus is further configured to:
stop a first timer in a running state, where the first timer is a timer associated with the first information, and the first information is prohibited from being sent during the running state of the first timer.

In combination with some embodiments of the fourth aspect, in some embodiments, the at least one first resource is used by the terminal for an SL communication.

In combination with some embodiments of the fourth aspect, in some embodiments, the first resource includes at least one of a RB set, a BWP, or a resource pool.

In combination with some embodiments of the fourth aspect, in some embodiments, the first information is an SR.

In combination with some embodiments of the fourth aspect, in some embodiments, the second information is an MAC CE, and the second information is carried by an MAC PDU.

In combination with some embodiments of the fourth aspect, in some embodiments, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

In a fifth aspect, embodiments of the present disclosure provide a second communication apparatus. The apparatus includes:
a receiving module, configured to receive first information, where the first information is used to request an uplink resource. The first information is triggered by a terminal, and a triggering condition of the first information is meeting a first condition.

In combination with some embodiments of the fourth aspect, in some embodiments, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is the network device allocates a resource to the terminal; or
the terminal being in a second mode and being in an RRC connected state, where the second mode is the terminal autonomously determines a resource.

In combination with some embodiments of the fifth aspect, in some embodiments, the receiving module is further configured to:
receive the corresponding first information respectively triggered by the at least one first resource.

In combination with some embodiments of the fifth aspect, in some embodiments, the first resource is used by the terminal for an SL communication.

In combination with some embodiments of the fifth aspect, in some embodiments, the first resource includes at least one of a RB set, a BWP, or a resource pool.

In combination with some embodiments of the fifth aspect, in some embodiments, the first information is an SR.

In combination with some embodiments of the fifth aspect, in some embodiments, the second information is an MAC CE, and the second information is carried by an MAC PDU.

In combination with some embodiments of the fifth aspect, in some embodiments, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

In a sixth aspect, embodiments of the present disclosure provide a communication device, which includes: at least one processor; at least one memory for storing instructions. The processor is configured to call the instructions to enable the communication device to execute the communication method described in the first or second aspect, and the optional implementations of the first or second aspect.

In a seventh aspect, embodiments of the present disclosure provide a communication system, which includes: a terminal and a network device. The terminal is configured to perform the method described in the first aspect and the optional implementations of the first aspect, and the network device is configured to perform the method described in the second aspect and the optional implementations of the second aspect.

In an eighth aspect, embodiments of the present disclosure provide a storage medium, which stores instructions. When the instructions are executed on a communication device, the communication device executes the method described in the first aspect and the optional implementations of the first aspect, or the method described in the second aspect and the optional implementations of the second aspect.

In a ninth aspect, embodiments of the present disclosure provide a program product. When the program product is executed by a communication device, the communication device executes the method described in the first aspect and the optional implementations of the first aspect, or the method described in the second aspect and the optional implementations of the second aspect.

In a tenth aspect, embodiments of the present disclosure provide a computer program. When the computer program is executed on a computer, the computer is enabled to execute the method described in the first aspect and the optional implementations of the first aspect, or the method described in the second aspect and the optional implementations of the second aspect.

It can be understood that the above-mentioned first communication apparatus, second communication apparatus, communication device, communication system, storage medium, program product, and computer program are all used to execute the methods proposed in the embodiments of the present disclosure. Therefore, for the beneficial effects that can be achieved, reference can be made to the beneficial effects in the corresponding methods, and will not be repeated here.

The present disclosure proposes an invention title. In some embodiments, terms such as communication method and information processing method, information sending method, information receiving method can be replaced with each other, terms such as communication apparatus and information processing apparatus, information sending apparatus, information receiving apparatus can be replaced with each other, and terms such as information processing system, communication system, information sending system, information receiving system can be replaced with each other.

The embodiments of the present disclosure are not exhaustive and are merely illustrative of some embodiments, and are not intended to limit the scope of protection of the present disclosure. In the absence of contradiction, each step in an embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined. In addition, the embodiments can be arbitrarily combined. For example, some or all steps of different embodiments can be arbitrarily combined, and a certain embodiment can be arbitrarily combined with the optional implementations of other embodiments.

In each embodiment of the present disclosure, unless otherwise specified or provided for by logic, the terms and/or descriptions between the embodiments are consistent and can be referenced by each other. The technical features in different embodiments can be combined to form a new embodiment based on their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above-mentioned", "said", "aforementioned", "this", etc., may mean "one and only one", or "one or more", "at least one", etc. For example, when using articles such as "a", "an", and "the" in English in translation, the noun following the article can be understood as a singular expression or a plural expression.

In the embodiments of the present disclosure, "a plurality of" refers to two or more.

In some embodiments, the terms "at least one of", "at least one item of", "one or more", "a plurality of", "multiple", etc. can be replaced with each other.

In the embodiments of the present disclosure, descriptions such as "at least one of A, B, C...", "A and/or B and/or C...", etc. include the situation where any one of A, B, C... exists alone, and also include any combination of any multiple of A, B, C..., and each situation can exist alone. For example, "at least one of A, B, C" includes the situation where A exists alone, B exists alone, C exists alone, the combination of A and B, the combination of A and C, the combination of B and C, and the combination of A, B, and C. For example, A and/or B includes the situation where A exists alone, B exists alone, and the combination of A and B.

In some embodiments, the recording methods such as "in a case A, in another case B", "in response to a case A, in response to another case B", etc. may include the following technical solutions according to the situation: executing A independently of B, that is, A in some embodiments; executing B independently of A, that is, B in some embodiments; A and B are selectively executed, that is, selected from A and B for execution in some embodiments; both A and B are executed, that is, A and B in some embodiments. When there are more branches such as A, B, C, the above is also similar.

The prefixes such as "first" and "second" in the embodiments of the present disclosure are only used to distinguish different description objects and do not constitute any restrictions on the position, order, priority, quantity or content of the description objects. For the statement of the description objects, please refer to the description in the context of the claims or embodiments, and no unnecessary restrictions should be constituted due to the use of prefixes. For example, if the description object is "field", the ordinal number before "field" in "first field" and "second field" does not limit the position or order of the "fields". The "first" and "second" do not limit whether the "fields" they modify are in the same message, nor do they limit the order of the "first field" and "second field". For another example, if the description object is "level", the ordinal number before "level" in "first level" and "second level" does not limit the priority between the "levels". For another example, the number of objects described is not limited by ordinal numbers and can be one or more. Taking "first apparatus" as an example, the number of "apparatuses" can be one or more. In addition, the objects modified by different prefixes can be the same or different. For example, if the description object is "apparatus", then the "first apparatus" and the "second apparatus" can be the same apparatus or different apparatuses, and their types can be the same or different. For another example, if the description object is "information", then the "first information" and the "second information" can be the same information or different information, and their contents can be the same or different.

In some embodiments, "including A," "comprising A," "indicating A," and "carrying A" can be interpreted as directly carrying A or indirectly indicating A.

In some embodiments, terms such as "in response to...", "in response to determining that...", "in a case of...", "at the time of...", "when...", "if...", "in a case that...", etc. can be used interchangeably.

In some embodiments, terms such as "greater than", "greater than or equal to", "not less than", "more than", "more than or equal to", "not less than", "higher than", "higher than or equal to", "not less than", and "above" can be replaced with each other, and terms such as "smaller than", "smaller than or equal to", "not greater than", "less than", "less than or equal to", "not more than", "lower than", "lower than or equal to", "not higher than", and "below" can be replaced with each other.

In some embodiments, apparatuses, etc. can be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" can be used interchangeably.

In some embodiments, a "network" can be interpreted as an apparatus included in the network (e.g., an access network device, a core network device, etc.).

In some embodiments, the terms "access network device (AN device)", "radio access network device (RAN device)", "base station (BS)", "radio base station" "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device may be replaced by a terminal. For example, the various embodiments of the present disclosure can also be applied to a structure in which a communication between the access network device, the core network device, or the network device and the terminal is replaced by a communication between multiple terminals (for example, which is also referred to as device-to-device (D2D), vehicle-to-everything (V2X), etc.). In this case, the terminal may be configured to have all or part of the functions of the access network device. Furthermore, the words "uplink" and "downlink" may be replaced with words corresponding to inter-terminal communication (e.g., "side"). For example, an uplink channel, a downlink channel, etc. may be replaced by a side channel, and an uplink, a downlink, etc. may be replaced by a sidelink.

In some embodiments, the terminal may be replaced by the access network device, the core network device, or the network device. In this case, the access network device, the core network device, or the network device may be configured to have all or part of the functions of the terminal.

In some embodiments, obtaining data, information, etc. may comply with the laws and regulations of the country where the data is obtained.

In some embodiments, data, information, etc. may be obtained with the user's consent.

In addition, each element, each row, or each column in the tables of the embodiments of the present disclosure can be implemented as an independent embodiment, and the combination of any elements, any rows, and any columns can also be implemented as an independent embodiment.

Correspondence relationships shown in the respective tables in the present disclosure may be configured or predefined. The values of the information in each table are only examples and can be configured to other values, which are not limited by the present disclosure. When configuring the correspondence relationships between information and parameters, it is not necessarily required to configure all the correspondence relationships illustrated in the tables. For example, in the tables in the present disclosure, the correspondence relationships shown in certain rows may not be configured. For another example, appropriate deformation adjustments may be made based on the above table, such as splitting, merging, etc. The names of the parameters indicated in the titles of the above tables may also be other names understandable to the communication device, and the values or representations of the parameters may also be other values or representations understandable to the communication device. When implementing the above tables, other data structures may also be used, such as arrays, queues, containers, stacks, linear lists, pointers, linked lists, trees, graphs, structures, classes, heaps, hash tables, or the like.

The predefined in the present disclosure may be understood as defined, pre-defined, stored, pre-stored, pre-negotiated, pre-configured, solidified, or pre-burned.

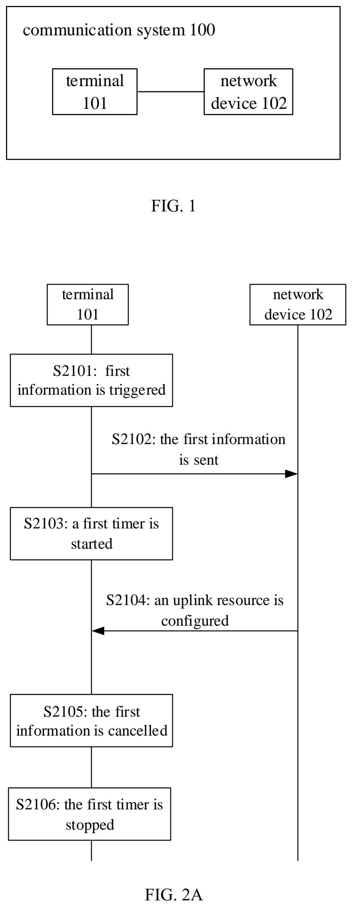

FIG. 1 is a schematic diagram showing an architecture of a communication system according to an embodiment of the present disclosure. As shown in FIG. 1, a communication system 100 may include a terminal 101 and a network device 102. The network device 102 may include at least one of an access network device and a core network device.

In some embodiments, the terminal 101 includes, for example, a mobile phone, a wearable device, an Internet of Things device, a car with communication function, a smart car, a Pad, a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and at least one of a wireless terminal device in a smart home, which is not limited in the present disclosure.

In some embodiments, the access network device is, for example, a node or device that accesses a terminal to a wireless network. The access network device may include an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and at least one of an access node in a wireless fidelity (WiFi) system, which is not limited in the present disclosure.

In some embodiments, the technical solution of the present disclosure may be applied to the Open RAN architecture. In this case, the interfaces between or within the access network devices involved in the embodiments of the present disclosure may be transformed into internal interfaces of Open RAN, and the processes and information interactions between these internal interfaces may be implemented through software or a program.

In some embodiments, the access network device may be composed of a centralized unit (CU) and a distributed unit (DU), where the CU may also be called a control unit. The CU-DU structure may be used to split a protocol layer of the access network device, with some functions of the protocol layer centrally controlled by the CU, and the remaining or all functions of the protocol layer distributed in the DU, which is centrally controlled by the CU, which is not limited in the present disclosure.

In some embodiments, the core network device may be a device including one or more network elements, or may be multiple devices or a group of devices each including all or part of one or more network elements. The network elements may be virtual or physical. The core network, for example, includes at least one of an Evolved Packet Core (EPC), a 5G Core Network (5GCN), or a Next Generation Core (NGC).

It can be understood that the communication system described in the embodiment of the present disclosure is for the purpose of more clearly illustrating the technical solution of the embodiments of the present disclosure, and does not constitute a limitation on the technical solution proposed in the embodiments of the present disclosure. Those skilled in the art can know that with the evolution of the system architecture and the emergence of new service scenarios, the technical solution proposed in the embodiments of the present disclosure is also applicable to similar technical problems.

The following embodiments of the present disclosure are applicable to the communication system 100 shown in FIG. 1, or some entities of the system, which is not limited in the present disclosure. The entities shown in FIG. 1 are examples. The communication system may include all or part of the entities in FIG. 1, and may also include other entities outside of FIG. 1. The number and form of the entities are arbitrary. The connection relationship between the entities is an example. The entities may be connected or disconnected, and the connection may be in any manner, which may be direct or indirect, and may be wired or wireless.

The embodiments of the present disclosure are applicable to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (a registered trademark)), CDMA2000, Ultra Mobile Broadband (UMB), IEEE 802.11 (Wi-Fi (a registered trademark)), IEEE 802.16 (WiMAX (a registered trademark)), IEEE 802.20, Ultra-WideBand (UWB), Bluetooth (a registered trademark)), Public Land Mobile Network (PLMN) network, Device-to-Device (D2D) system, Machine-to-Machine (M2M) system, Internet of Things (IoT) system, Vehicle-to-Everything (V2X), system utilizing other communication methods, and next-generation system expanded based on these technologies. In addition, multiple systems can also be combined (for example, a combination of LTE or LTE-A and 5G, etc.) for application.

To facilitate understanding, the terms involved in the present disclosure are first introduced.

### 1. Listen-Before-Talk (LBT)

LBT is a widely used technology in radio communications. Before starting transmission, a radio transmitter first listens to its radio environment to detect whether a channel is idle. If the channel is busy, it waits until the channel is idle before transmitting, avoiding a channel access conflict and achieving channel spectrum sharing.

### 2. Sidelink (SL)

A link for direct communication between terminal devices.

In an embodiment of the present disclosure, the terminal may detect whether its resource trigger an SL consistent LBT failure. Optionally, a method for detecting by the terminal whether its resource triggers the SL consistent LBT failure may include the following steps.

Step 1, the terminal obtains a second timer and a first value configured by the network device.

Optionally, the name of the second timer is not limited, and it may be, for example, "SL LBT failure detection timer", "sl-Lbt-FailureDetectionTimer", etc.; the name of the first value is not limited, and it can be, for example, "maximum number of LBT failures", "sl-Lbt-FailureInstanceMaxCount", etc.

Optionally, the second timer and the first value may be configured by the network device through a first signaling. Optionally, the name of the first signaling is not limited, and it may be, for example, "Radio Resource Control (RRC) signaling", etc. Optionally, the RRC signaling may be, for example: sl-Lbt-FailureRecoveryConfig.

Step 2, the terminal maintains a count value, where an initial value of the count value is 0.

Optionally, the name of the count value is not limited, and it may be, for example, "SL LBT count value", "SL LBT_counter", etc.

Step 3, the terminal detects whether the SL LBT failure occurs to the terminal's resource, and records the counting number of consistent SL LBT failure of the terminal resource by updating the count value, thereby further determining whether the resource has triggered the SL consistent LBT failure.

Optionally, the method for detecting by the terminal whether the SL LBT failure occurs to the terminal's resource may include: the terminal performs an SL LBT detection on the resource; if the terminal does not receive an SL LBT failure indication (such as the terminal's upper layer does not receive the SL LBT failure indication sent by the terminal's physical layer), it determines that the SL LBT failure does not occur in the resource; if the terminal receives an SL LBT failure indication (such as the terminal's upper layer receives the SL LBT failure indication sent by the terminal's physical layer), it determines that the SL LBT failure occurs in the resource. Optionally, in some embodiments, the occurrence of the SL LBT failure may be understood as: the terminal does not detect any idle resource available for transmission in the resource; for example, the terminal does not detect any idle resource available for SL transmission in the resource.

Optionally, the method for recording by the terminal the number of SL LBT failures occurring in its resource may include: when the terminal detects that the SL LBT failure occurs in the resource for the first time, the terminal starts the second timer and adds 1 to the count value; when the terminal detects that the SL LBT failure occurs in the resource for the second time during an activation period of the second timer, the terminal restarts the second timer and adds 1 to the count value again, and so on, to update the count value. When the count value is greater than or equal to the first value, the terminal considers that the resource triggers the SL consistent LBT failure.

Optionally, in some embodiments, when the terminal meets a third condition, the count value is reset to 0. Optionally, the third condition may include at least one of:
the second timer being expired;
the terminal receiving at least one of a second timer or a first value that is reconfigured by the network device; or
the SL LBT failure triggered by the terminal on this resource being canceled.

Optionally, in some embodiments, the above-mentioned "the SL LBT failure triggered by the terminal on this resource being canceled" may be understood as: after the resource triggers the SL consistent LBT failure, the terminal determines that a received signal strength indication (RSSI) measurement result of the resource is less than or equal to a predefined threshold, thereby canceling the SL consistent LBT failure triggered by the resource. Optionally, there may be other methods of cancelling the SL consistent LBT failure, which are not specifically limited in the present disclosure.

By executing the above steps 1 to 3, the detection of the SL consistent LBT failure can be achieved.

Optionally, in some embodiments, for a terminal running in a first mode or running in a second mode and in an RRC connected state, when the terminal determines that its resource has triggered the SL consistent LBT failure, it means that the terminal currently has no available SL resource for SL communication. At this time, the terminal usually reports an SL consistent LBT failure report to the network device. Optionally, the above-mentioned first mode may be: the network device allocates a resource to the terminal. Optionally, the name of the first mode is not limited, and it may be, for example, "mode 1" etc. The second mode is the terminal autonomously determines a resource, for example, the terminal may randomly select a resource from a resource pool configured or pre-configured by the network device. Optionally, the name of the second mode is not limited, and it may be, for example, "mode 2" etc. Optionally, the method for reporting by the terminal the SL consistent LBT failure report to the network device may be, for example: sending a first indication to the network device, where the first indication indicates that the terminal's resource has triggered the SL consistent LBT failure. Optionally, after receiving the first indication, the network device may configure another available resource for the terminal through resource reconfiguration, etc., to ensure that the terminal resumes the SL communication based on the resource reconfigured by the network device.

Optionally, in some embodiments, when the terminal determines that its resource has triggered the SL consistent LBT failure, there may be a situation that there is no uplink resource available for sending the first indication. At this time, the terminal needs to send the first information to the network device. The first information is used to request the network device for an uplink resource used to send the first indication. The name of the first information is not limited, and it may be, for example: a scheduling request (SR), a resource request, etc.

FIG. 2A is an interactive schematic diagram illustrating a communication method according to an embodiment of the present disclosure.

As shown in FIG. 2A, an embodiment of the present disclosure relates to a communication method. The method is applicable to a communication system 100, and the method includes the following steps.

Step 2101, first information is triggered.

Optionally, in some embodiments, the first information may be used to request an uplink resource.

Optionally, in some embodiments, the first information may be triggered by the terminal when a first condition is met.

Optionally, in some embodiments, the first condition may include at least one of:
the terminal detecting that at least one first resource triggers an SL consistent LBT failure;
the terminal detecting that at least one first resource triggers an SL consistent LBT failure and the SL consistent LBT failure is not canceled;
there exiting no uplink resources available for sending second information, where optionally, the second information indicates that at least one first resource triggers an SL consistent LBT failure, or the second information indicates that at least one first resource triggers an SL consistent LBT failure and the SL consistent LBT failure is not canceled; optionally, the second information is used by the terminal to report an SL consistent LBT failure report to the network device;
the terminal being in a first mode, where optionally the first mode may be a network device allocates a resource to the terminal; optionally the name of the first mode is not limited, and may be, for example, "mode 1" or the like;
the terminal being in a second mode and the terminal being in an RRC connected state; where optionally the second mode is the terminal autonomously determines a resource, for example, the terminal may randomly select a resource from a resource pool configured or pre-configured by the network device; where optionally, the name of the second mode is not limited, and it may be, for example, "mode 2" or the like.

Optionally, in some embodiments, the first condition may be: the terminal detects that at least one first resource triggers the SL consistent LBT failure, and the terminal is in the first mode; or the first condition may be: the terminal detects that at least one first resource triggers the SL consistent LBT failure, and the terminal is in the second mode and the terminal is in the RRC connected state;

In some other embodiments, the first condition may be: the terminal detects that at least one first resource triggers the SL consistent LBT failure and the SL consistent LBT failure is not cancelled, and the terminal is in the first mode; or the first condition may be: the terminal detects that at least one first resource triggers the SL consistent LBT failure and the SL consistent LBT failure is not canceled, and the terminal is in the second mode and the terminal is in the RRC connected state;

In some further embodiments, the first condition may be: the terminal detects that at least one first resource triggers the SL consistent LBT failure, there exists no uplink resource available for sending the second information, and the terminal is in the first mode; or the first condition may be: the terminal detects that at least one first resource triggers the SL consistent LBT failure, there exists no uplink resource available for sending the second information, and the terminal is in the second mode and the terminal is in the RRC connected state.

In some other embodiments, the first condition may be: the terminal detects that at least one first resource triggers the SL consistent LBT failure and the SL consistent LBT failure is not canceled, there exists no uplink resource available for sending the second information, and the terminal is in the first mode; or the first condition may be: the terminal detects that at least one first resource triggers the SL consistent LBT failure and the SL consistent LBT failure is not canceled, there exists no uplink resources available for sending the second information, and the terminal is in the second mode and the terminal is in the RRC connected state.

Optionally, in some embodiments, the reason for introducing "the terminal being in a first mode", "the terminal being in a second mode and being in a radio resource control (RRC) connected state" in the above-mentioned first condition is that: when the terminal is in the first mode, or in the second mode and in the RRC connected state, it means that the terminal may currently communicate with the network device, or it means that the terminal may currently perform uplink transmission with the network device. Therefore, at this time, on the premise that the terminal can currently communicate with the network device, if the terminal meets at least one of "detecting that at least one first resource triggers a sidelink (SL) consistent listen-before-talk (LBT) failure", "detecting that at least one first resource triggers an SL consistent LBT failure and the SL consistent LBT failure is not cancelled", or "there existing no uplink resource available for sending second information", the terminal may trigger the first information, so that the terminal can subsequently successfully send the triggered first information to the network device to request the uplink resource.

The following is an explanation of the meaning of the terms mentioned in the first condition above.

Optionally, in some embodiments, the above-mentioned first resource may be used by the terminal for an SL communication. Optionally, the first resource may include at least one of a RB set, a BWP, or a resource pool.

Optionally, the above-mentioned "SL consistent LBT failure" may be understood as: for the consistent LBT failure of the SL communication, for example, when the terminal detects that the first resource used for SL communication triggers the consistent LBT failure, it is considered that the first resource triggers SL consistent LBT failure. For a detailed introduction to the consistent LBT failures, reference can be made to the above steps 1 to 3.

Optionally, in some embodiments, the above "at least one first resource triggers an SL consistent LBT failure and the SL consistent LBT failure is not cancelled" may be understood as: after the first resource triggers the SL consistent LBT failure, the SL consistent LBT failure triggered by the first resource is not canceled. For example, after the first resource triggers the SL consistent LBT failure, the terminal determines that an RSSI measurement result of the first resource is not less than or equal to a predefined threshold, and thus does not cancel the SL consistent LBT failure triggered by the first resource. Optionally, the reason for not canceling the SL consistent LBT failure may also be other reasons, which are not specifically limited in the present disclosure.

Optionally, in some embodiments, the second information mentioned in the above-mentioned first condition may indicate that the at least one first resource triggers the SL consistent LBT failure, or the second information may indicate that the at least one first resource triggers the SL consistent LBT failure and the SL consistent LBT failure is not canceled.

Optionally, in some embodiments, the second information may include a first indication, where the first indication may indicate that the at least one first resource triggers the SL consistent LBT failure, or indicate that the at least one first resource triggers the SL consistent LBT failure and the SL consistent LBT failure is not canceled;

In other embodiments, by indicating the first resource that triggers the SL consistent LBT failure, the second information may indicate to the network device that the at least one first resource triggers the SL consistent LBT failure, or indicate that the at least one first resource triggers the SL consistent LBT failure and the SL consistent LBT failure is not canceled. For example, in some embodiments, the second information may include an identifier corresponding to the first resource that triggers the SL consistent LBT failure.

In some further embodiments, the second information may include a bit map, where each bit in the bit map corresponds to one first resource, and a bit value carried by the bit in the bit map indicates whether the corresponding first resource triggers the SL consistent LBT failure. For example, when the bit value carried by the bit in the bit map is a first value, it indicates that the corresponding first resource triggers the SL consistent LBT failure or triggers the SL consistent LBT failure and the SL consistent LBT failure is not cancelled. When the bit value carried by the bit in the bit map is a second value, it indicates that the corresponding first resource does not trigger the SL consistent LBT failure or the corresponding first resource has triggered the SL consistent LBT failure and the triggered SL consistent LBT failure has been canceled. Optionally, the first value may be, for example, "1", and the second value may be, for example, "0".

Optionally, in some embodiments, the second information may be an MAC layer signaling. For example, the second information may be an MAC CE signaling, for example, it may be an MAC CE including an SL consistent LBT failure indication. It should be understood that the second information may also be another MAC layer signaling in addition to the MAC CE signaling, which is not limited in the present disclosure. Optionally, the second information may be carried by an MAC PDU.

In some embodiments, the name of the above-mentioned second information is not limited, and it may be, for example, "SL consistent LBT failure MAC CE", "SL consistent LBT failure information", "consistent LBT failure information", etc. The name of the above-mentioned first indication is not limited, and it may be, for example, "SL consistent LBT failure indication", "consistent LBT failure indication", etc.

Optionally, in some embodiments, the aforementioned "there existing no uplink resource available for sending second information" may include at least one of:
there existing no available uplink new transmission resource; or
there existing an available uplink new transmission resource, and the available uplink new transmission resource is unable to include the second information and a sub-header of the second information. For example, when the second information is the MAC CE, the available uplink new transmission resources cannot include the MAC CE and the sub-header of the MAC CE.

Optionally, in some embodiments, when the terminal meets the first condition, it means that the first resource of the terminal cannot be used for the SL communication due to triggering the SL consistent LBT failure, and the terminal is currently unable to report an SL consistent LBT failure report due to the lack of the available uplink resource. At this time, the terminal may trigger the first information, which may be used to request the uplink resource, so that the terminal can subsequently use the requested uplink resource to successfully report the SL consistent LBT failure report.

Optionally, in some embodiments, the above-mentioned "triggering first information" may be understood as: the terminal generates the first information and places the first information in a to-be-send state.

Optionally, in some embodiments, triggering the first information may include: triggering corresponding first information respectively for at least one first resource meeting the first condition.

For example, assuming that the terminal has two first resources, namely first resource #1 and first resource #2, and assuming that the terminal successively detects that the first resource #1 and the first resource #2 trigger the SL consistent LBT failure and the SL consistent LBT failure is not canceled, and there is no uplink resource available for sending the second information, then the first information #1 may be triggered for the first resource #1 first (that is, the first information #1 is generated, and the first information #1 is placed in a to-be-sent state), and then the first information #2 may be triggered for the first resource #2 (that is, the first information #2 is generated, and the first information #2 is placed in a to-be-sent state).

Optionally, in some embodiments, the above-mentioned "trigger" may be equivalent to "generate". It should be understood that the above-mentioned "trigger" and "generate" are only illustrative examples of the embodiments of the present disclosure, and other nouns with similar meanings to "trigger" and "generate" (such as "produce", "enable", etc.) are also within the scope of protection of the present disclosure. Optionally, in some embodiments, the name of the first information is not limited, and may be, for example, "SR", "resource request", "resource scheduling request", etc. The name of the first timer is not limited either, and may be, for example, "SR prohibit timer", "sr-ProhibitTimer", "prohibit timer", etc.

In some embodiments, the name of information, etc. is not limited to the names described in the embodiments, and terms such as "information", "message", "signal", "signaling", "report", "configuration", "indication", "instruction", "command", "channel", "parameter", "domain", "field", "symbol", "symbol", "codeword", "codebook", "codeword", "codepoint", "bit", "data", "program", and "chip" can be used interchangeably.

In some embodiments, terms such as "up-link", "uplink", "physical uplink" can be used interchangeably, and terms such as "down-link", "downlink", "physical downlink" can be used interchangeably, and terms such as "side", "sidelink", "side communication", "sidelink communication", "direct connection", "direct link", "direct communication", "direct link communication" can be interchangeable with each other.

In some embodiments, the terms "downlink control information (DCI)", "downlink (DL) assignment", "DL DCI", "uplink (UL) grant", "UL DCI" and the like can be used interchangeably.

In some embodiments, "obtain", "acquire", "get", "receive", "transmit", "bidirectional transmission", "send and/or receive" can be used interchangeably, and can be interpreted as receiving from another entity, obtaining from a protocol, obtaining from a higher layer, acquiring by self-processing, autonomous implementation, etc.

In some embodiments, terms such as "trigger", "generate", "produce", "enable", and "occur" can be used interchangeably.

Step 2102, the terminal sends the first information.

Optionally, in some embodiments, the network device receives the first information.

Optionally, in some embodiments, the first information may be used to request the uplink resource.

Optionally, in some embodiments, the name of the first information is not limited, and may be, for example, "SR", "resource request", "resource scheduling request", etc.

Optionally, in some embodiments, the terminal sends a physical uplink control channel (PUCCH), where the PUCCH carries the first information. Optionally, the network device receives the PUCCH, which is not limited in the present disclosure, and may also be another uplink information or uplink channel.

Optionally, in some embodiments, the above-mentioned "the terminal sends the first information" may include:
corresponding at least one first information respectively triggered by at least one first resource is sent.

In some embodiments, terms such as "send", "transmit", "report", "download", "transmit", "bidirectional transmission", "send and/or receive" can be used interchangeably.

In some embodiments, terms such as "physical downlink shared channel (PDSCH)", "DL data", "physical downlink control channel (PDCCH)" can be used interchangeably, and terms such as "physical uplink shared channel (PUSCH)", "UL data", and "PUCCH" can be used interchangeably.

Step 2103, the terminal starts a first timer.

Optionally, in some embodiments, after the terminal places the first information in a to-be-sent state by triggering the first information, the terminal subsequently sends the first information when the first information can be sent. Optionally, in some embodiments, "when the first information can be sent" may be understood as, for example, when a first timer is not started, where the first timer may be a timer associated with the first information. Optionally, in some embodiments, in order to prevent the first information from being sent frequently, the first timer is associated with the first information, and the first timer is started after the first information is sent. When the first timer is in a running state, the first information is prohibited from being sent. Optionally, the above "the first information is associated with the first timer" may include: one piece of first information is associated with one first timer respectively, or multiple pieces of first information are associated with one first timer at the same time. Optionally, when each piece of first information is associated with one first timer, if any first timer is in the running state, all first information is prohibited from being sent.

The following is an example of step 2102 and step 2103:
For example, it is assumed that in the above step 2101, the terminal first triggers the first information #1 for the first resource #1, and then triggers the first information #2 for the first resource #2. The method for sending by the terminal the first information #1 and the first information 2 may include: the terminal first sends the first information #1 and starts the first timer; during the running period of the first timer, even if the terminal triggers the first information #2 and puts the first information #2 in a to-be-sent state, since the first timer is in the running state, the first information #2 is prohibited from being sent, and the first information #2 must be sent after the first timer expires.

In some embodiments, terms such as "period", "moment", "time point", "time" and "time position" can be replaced with each other, and terms such as "duration", "period", "time window", "window", and "time" can be replaced with each other.

Step 2104, the network device configures an uplink resource.

Optionally, in some embodiments, the terminal receives the uplink resource.

Optionally, in some embodiments, the uplink resource may be used by the terminal to report an SL consistent LBT failure report. For example, the uplink resource may be used by the terminal to send the above-mentioned second information to the network device. For the detailed introduction to the second information, reference can be made to the detailed introduction to step 2101 above.

Optionally, in some embodiments, the network device sends an RRC signaling, in which the uplink resource is configured. Optionally, the terminal receives the RRC signaling, which is not limited in the present disclosure.

Step 2105, the terminal cancels the first information.

Optionally, the above-mentioned canceling the first information may be cancelling the triggered first information. Optionally, in some embodiments, canceling the first information may include at least one of:
no longer sending the first information, for example, for a triggered and sent first information, the first information is no longer resent, thereby canceling the first information, or for a triggered first information not being sent, the first information may be no longer sent, thereby canceling the first information; or
cancelling a to-be-sent state of the first information, for example, for a triggered first information not being sent, the to-be-sent state of the first information may be canceled to stop sending the first information, thereby canceling the first information.

Optionally, in some embodiments, the first information may be cancelled by the terminal when the second condition is met.

Optionally, in some embodiments, the second condition may include at least one of:
the second information being sent successfully; or
the SL consistent LBT failure triggered by the at least one first resource being cancelled.

For the relevant introduction about the second information, the first resource, and the SL consistent LBT failure, reference can be made to the above step 2101.

The following describes the reason why the first information should be cancelled when the second condition is met:
Optionally, in some embodiments, it can be seen from the aforementioned step 2101 that the first information is a request for the uplink resource for reporting the SL consistent LBT failure report, and the SL consistent LBT failure report indicates that the first resource triggers the SL consistent LBT failure, with the purpose of achieving recovery of the SL consistent LBT failure of the first resource. Optionally, when the terminal meets the above-mentioned second condition, it means that the terminal has successfully sent the second information, or at least one SL consistent LBT failure triggered by the first resource is cancelled. Optionally, when the terminal successfully sends the second information, it means that the terminal successfully reports the SL consistent LBT failure report. At this time, it is not required to send the first information to request the uplink resource for reporting the SL consistent LBT failure report, so the first information triggered in step 2101 can be canceled. Optionally, when the SL consistent LBT failure triggered by the first resource is canceled, it means that it is not required to report the SL consistent LBT failure report anymore, and it is not required to use the first information to request the uplink resource for reporting the SL consistent LBT failure report. Therefore, it is not required to send the first information at this time, and the first information triggered in step 2101 can also be canceled.

Optionally, in some embodiments, canceling the first information may include: canceling the corresponding first information triggered by the first resource that meets the second condition.

Optionally, for example, the corresponding first information triggered by the first resource, which is indicated in the successfully sent second information, may be canceled.

For example, assuming that in the above step 2101, the terminal triggers the first information #1 for the first resource #1 and triggers the first information #2 for the first resource #2, and the second information sent by the terminal in the above step 2102 indicates that the first resource #1 triggers the SL consistent LBT failure and the first resource #2 triggers the SL consistent LBT failure, then in this step 2105, the terminal may cancel the first information #1 and cancel the first information #2.

Optionally, for example, the corresponding first information triggered by the first resource, for which the SL consistent LBT failure is cancelled, may be cancelled.

For example, assuming that in the above step 2101, the terminal triggers the first information #1 for the first resource #1 and triggers the first information #2 for the first resource #2, and the SL consistent LBT failure triggered by the first resource #1 in the above step 2102 is canceled, then in the step 2105, the terminal may cancel the first information #1 without canceling the first information #2.

Optionally, in some other embodiments, canceling the first information may include: canceling all triggered first information.

Optionally, for example, when the terminal successfully sends the above-mentioned second information, no matter which first resource is indicated in the second information, the terminal cancels all the triggered first information.

For example, assuming that in the above step 2101, the terminal triggers the first information #1 for the first resource #1 and triggers the first information #2 for the first resource #2, and the second information sent by the terminal in the above step 2102 indicates that the first resource #1 triggers the SL consistent LBT failure, then in this step 2105, the terminal may cancel the first information #1 and the first information #2.

Optionally, for another example, no matter which first resource's SL consistent LBT failure is canceled, the terminal will cancel all triggered first information.

For example, assuming that in the above step 2101, the terminal triggers the first information #1 for the first resource #1 and triggers the first information #2 for the first resource #2, and the SL consistent LBT failure triggered by the first resource #1 in the above step 2102 is canceled, then in this step 2105, the terminal may cancel the first information #1 and the first information #2.

Step 2106, the terminal stops the first timer.

Optionally, in some embodiments, after the terminal cancels the first information, when the first timer associated with the first information is in the running state, the terminal may stop the first timer.

In some embodiments, the terms "radio", "wireless", "radio access network (RAN)", "access network (AN)", "RAN-based" and the like can be used interchangeably.

In some embodiments, the terms "component carrier (CC)", "cell", "frequency carrier", "carrier frequency" and the like can be used interchangeably.

In some embodiments, terms such as "resource block (RB)", "physical resource block (PRB)", "sub-carrier group (SCG)", "resource element group (REG)", "PRB pair", "RB pair", "resource element (RE)", and "sub-carrier" can be used interchangeably.

In some embodiments, terms such as "certain", "predetermined", "preset", "setting", "indicated", "a certain", "any", and "first" can be used interchangeably. "Specific A", "predetermined A", "preset A", "setting A", "indicated A", "a certain A", "any A", and "first A" can be interpreted as A pre-specified in a protocol, etc., or as A obtained through setting, configuration, or indication, etc., or as specific A, a certain A, any A, or first A, etc., which is not limited in the present disclosure.

In some embodiments, the determination or judgment may be performed by a value represented by 1 bit (0 or 1), or by a true or false value (Boolean value) represented by true or false, or by comparison of numerical values (for example, comparison with a predetermined value), which is not limited in the present disclosure.

In some embodiments, "not expecting to receive" can be interpreted as not receiving on time domain resources and/or frequency domain resources, or as not performing subsequent processing on data after receiving it; "not expecting to send" can be interpreted as not sending, or as sending but not expecting the recipient to respond to the content sent.

The communication method involved in the embodiments of the present disclosure may include at least one of steps S2101 to S2106. For example, step S2101 may be implemented as an independent embodiment, step S2102 may be implemented as an independent embodiment, steps S2101+S2102 may be implemented as an independent embodiment, steps S2101+S2102+S2103 may be implemented as an independent embodiment, steps S2101+S2102+S2103+S2104 may be implemented as an independent embodiment, and steps S2101+S2102+S2103+S2104+S2105 may be implemented as an independent embodiment, which is not limited in the present disclosure.

In some embodiments, step S2106 is optional, and one or more of these steps may be omitted or replaced in different embodiments.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

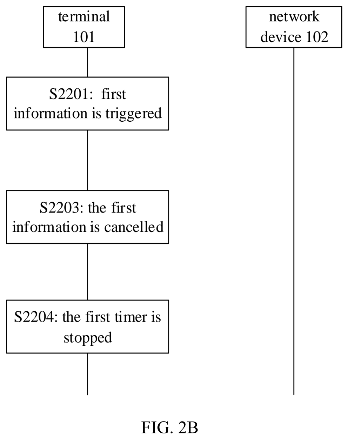

FIG. 2B is an interactive diagram illustrating a communication method according to an embodiment of the present disclosure.

As shown in FIG. 2B, an embodiment of the present disclosure relates to a communication method. The method is applicable to a communication system 100, and the method includes the following steps.

Step 2201, a terminal triggers first information.

Step 2202, the terminal cancels the first information.

Step 2203, the terminal stops a first timer.

For a detailed description of steps 2201-2203, reference can be made to the above described embodiments. The communication method involved in the embodiments of the present disclosure may include at least one of steps S2201 to S2203. For example, step S2201 may be implemented as an independent embodiment, step S2202 may be implemented as an independent embodiment, or steps S2201+S2202 may be implemented as an independent embodiment, which is not limited in the present disclosure.

In some embodiments, step S2203 is optional, and one or more of these steps may be omitted or replaced in different embodiments.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

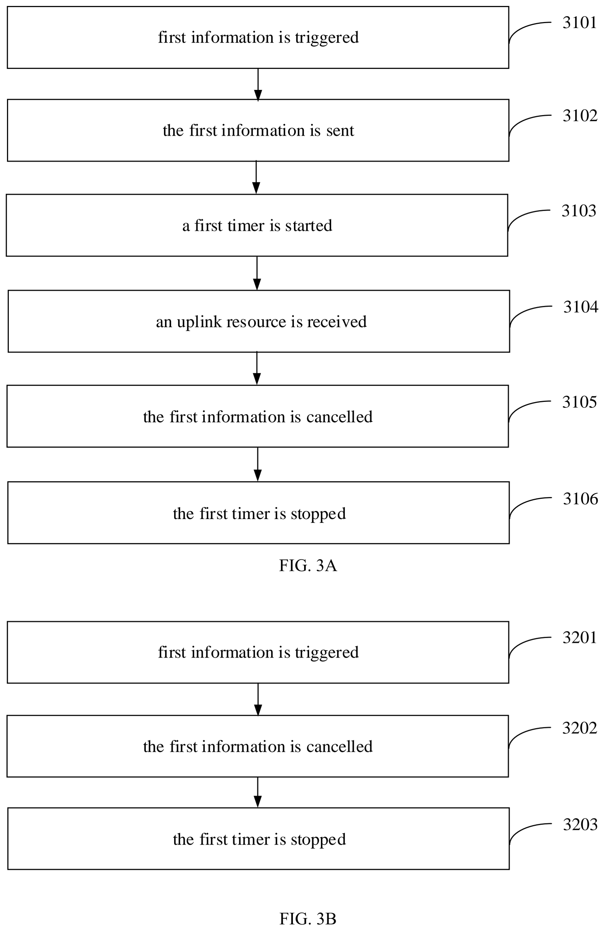

FIG. 3A is an interactive schematic diagram illustrating a communication method according to an embodiment of the present disclosure.

As shown in FIG. 3A, an embodiment of the present disclosure relates to a communication method. The method is applicable to a terminal 101, and the method includes the following steps.

Step 3101, first information is triggered.

Step 3102, the first information is sent.

For optional implementations of step 3102, reference can be made to the optional implementations of step 2102 in FIG. 2A and other parts of the embodiments involved in FIG. 2A, which will not be repeated here.

Optionally, in some embodiments, the terminal sends the first information to a network device, which is not limited in the present disclosure, and the first information may also be sent to another entity.

Optionally, in some embodiments, the first information may be used to request the network device to configure an uplink resource for the terminal. For corresponding implementations, reference can be made to the optional implementations of step 2102 in FIG. 2A and other parts of the embodiments involved in FIG. 2A, which will not be repeated here.

Step 3103, a first timer is started.

Step 3104, an uplink resource is received.

For optional implementations of step 3104, reference can be made to the optional implementations of step 2104 in FIG. 2A and other parts of the embodiment involved in FIG. 2A, which will not be repeated here.

Optionally, in some embodiments, the terminal receives the uplink resource configured by the network device, which is not limited in the present disclosure, and the terminal may also receive the uplink resource configured by another entity.

Optionally, in some embodiments, the uplink resource may be used by the terminal to report an SL consistent LBT failure report. For example, the uplink resource may be used by the terminal to send the above-mentioned second information to the network device. For corresponding optional implementations, reference can be made to the optional implementations of step 2101 in FIG. 2A and other parts of the embodiments involved in FIG. 2A, which will not be repeated here.

Step 3105, the first information is cancelled.

Step 3106, the first timer is stopped.

For detailed descriptions of steps 3101-3106, reference can be made to the contents of the embodiment of FIG. 2A.

The communication method involved in the embodiments of the present disclosure may include at least one of steps S3101 to S3106. For example, step S3101 may be implemented as an independent embodiment, step S3102 may be implemented as an independent embodiment, steps S3101+S3102 may be implemented as an independent embodiment, steps S3101+S3102+S3103 may be implemented as an independent embodiment, steps S3101+S3102+S3103+S3104 may be implemented as an independent embodiment, and steps S3101+S3102+S3103+S3104+S3105 may be implemented as an independent embodiment, which is not limited in the present disclosure.

In some embodiments, step S3106 is optional, and one or more of these steps may be omitted or replaced in different embodiments.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

FIG. 3B is an interactive diagram illustrating a communication method according to an embodiment of the present disclosure. As shown in FIG. 3B, an embodiment of the present disclosure relates to a communication method. The method is applicable to a terminal 101, and the method includes the following steps.

Step 3201, first information is triggered.

Step 3202, the first information is cancelled.

Step 3203, a first timer is stopped.

For detailed descriptions of steps 3201-3203, reference can be made to the contents of the embodiments of FIG. 2B above.

The communication method involved in the embodiments of the present disclosure may include at least one of steps S3201 to S3203. For example, step S3201 may be implemented as an independent embodiment, step S3202 may be implemented as an independent embodiment, and steps S3201+S3202 may be implemented as an independent embodiment, which is not limited in the present disclosure.

In some embodiments, step S3203 is optional, and one or more of these steps may be omitted or replaced in different embodiments.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

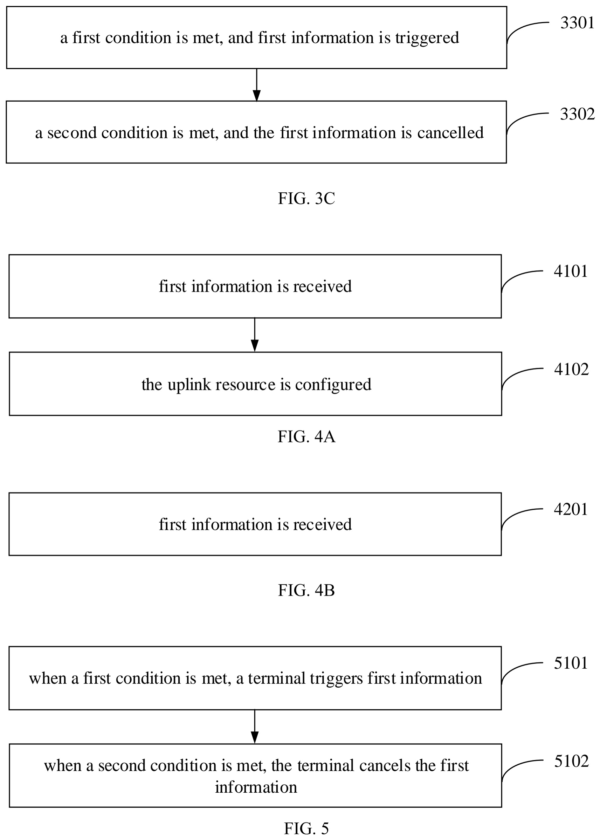

FIG. 3C is an interactive diagram illustrating a communication method according to an embodiment of the present disclosure. As shown in FIG. 3C, an embodiment of the present disclosure relates to a communication method. The method is applicable to a terminal 101, and the method includes at least one of the following steps.

Step 3301, a first condition is met, and first information is triggered.

Step 3302, a second condition is met, and the first information is cancelled.

Optionally, the first information is used to request an uplink resource.

Optionally, after the triggering first information, the method further includes:
sending the first information.

Optionally, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is a network device allocates a resource to the terminal; or
the terminal being in a second mode and being in an RRC connected state, where the second mode is the terminal autonomously determines a resource.

Optionally, the second condition includes at least one of:
the second information being sent successfully, where the second information indicates that the at least one first resource triggers the SL consistent LBT failure; or
the SL consistent LBT failure triggered by the at least one first resource being cancelled

Optionally, triggering the first information includes:
triggering corresponding first information respectively for at least one first resource meeting the first condition.

Optionally, canceling the first information includes:
cancelling the corresponding first information triggered by a first resource meeting the second condition.

Optionally, sending the first information includes:
sending the corresponding at least one first information respectively triggered by the at least one first resource.

Optionally, the method further includes:
starting a first timer, where the first timer is a timer associated with the first information, and the first information is prohibited from being sent during a running state of the first timer.

Optionally, after canceling the first information, the method further includes:
stopping a first timer in a running state, where the first timer is a timer associated with the first information, and the first information is prohibited from being sent during the running state of the first timer.

Optionally, the first resource is used by the terminal for an SL communication.

Optionally, the first resource includes at least one of a RB set, a BWP, or a resource pool.

Optionally, the first information is an SR.

Optionally, the second information is an MAC CE, and the second information is carried by an MAC PDU.

Optionally, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

For detailed introductions to steps 3301-3302, reference can be made to the steps in any of the embodiments of FIG. 2A-FIG. 2C, FIG. 3A, and FIG. 3B, and other related parts of the embodiments involved in FIG. 2A-FIG. 2C, FIG. 3A, and FIG. 3B.

The communication method involved in the embodiments of the present disclosure may include at least one of steps S3301 to S3302. For example, step S3301 may be implemented as an independent embodiment, step S3302 may be implemented as an independent embodiment, and steps S3301+S3302 may be implemented as an independent embodiment, which is not limited in the present disclosure.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

FIG. 4A is an interactive schematic diagram illustrating a communication method according to an embodiment of the present disclosure. As shown in FIG. 4A, an embodiment of the present disclosure relates to a communication method. The method is applicable to a network device 102, and the method includes the following steps.

Step 4101, first information is received.

For optional implementations of step 4101, reference can be made to the optional implementations of step 2102 in FIG. 2A and other parts of the embodiments involved in FIG. 2A, which will not be repeated here.

Optionally, in some embodiments, the network device receives the first information sent by the terminal, which is not limited in the present disclosure, and the network device may also receive the first information sent by another entity.

Optionally, in some embodiments, the first information may be used to request the network device to configure an uplink resource for the terminal. For corresponding optional implementations, reference can be made to the optional implementations of step 2104 in FIG. 2A and other parts of the embodiments involved in FIG. 2A, which will not be repeated here.

Step 4102, the uplink resource is configured.

For optional implementations of step 4102, reference can be made to the optional implementations of step 2104 in FIG. 2A and other parts of the embodiments involved in FIG. 2A, which will not be repeated here.

Optionally, in some embodiments, the network device configures the uplink resource for the terminal, which is not limited in the present disclosure, and the network device may configure the uplink resource for another entity.

Optionally, in some embodiments, the uplink resource may be used by the terminal to report an SL consistent LBT failure report. For example, the uplink resource may be used by the terminal to send the above-mentioned second information to the network device. For corresponding optional implementations, reference can be made to the optional implementations of step 2101 in FIG. 2A and other parts of the embodiments involved in FIG. 2A, which will not be repeated here.

For detailed descriptions of steps 4101-4102, reference can be made to the contents of the embodiment of FIG. 2A above.

The communication method involved in the embodiments of the present disclosure may include at least one of steps S4101 to S4102. For example, step S4101 may be implemented as an independent embodiment, step S4102 may be implemented as an independent embodiment, and steps S4101+S4102 may be implemented as an independent embodiment, which is not limited in the present disclosure.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

FIG. 4B is an interactive diagram illustrating a communication method according to an embodiment of the present disclosure. As shown in FIG. 4B, an embodiment of the present disclosure relates to a communication method. The method is applicable to a network device 102, and the method includes the following step.

Step 4201, first information is received.

Optionally, the first information is used to request an uplink resource.

Optionally, the first information is triggered by a terminal, and a triggering condition of the first information is meeting a first condition.

Optionally, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is the network device allocates a resource to the terminal; or
the terminal being in a second mode and being in an RRC connected state, where the second mode is the terminal autonomously determines a resource.

Optionally, receiving the first information includes:
receiving the corresponding first information respectively triggered by the at least one first resource.

Optionally, the first resource is used by the terminal for an SL communication.

Optionally, the first resource includes at least one of a RB set, a BWP, or a resource pool.

Optionally, the first information is an SR.

Optionally, the second information is an MAC CE, and the second information is carried by an MAC PDU.

Optionally, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

For detailed introductions to step 4201, reference can be made to the steps in any of the embodiments of FIG. 2A to FIG. 2C and FIG. 4A, and other related parts of the embodiments involved in FIG. 2A to FIG. 2C and FIG. 4A.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

FIG. 5 is a flow chart showing a communication method according to an embodiment of the present disclosure. As shown in FIG. 5, an embodiment of the present disclosure relates to a communication method. The method is applicable to a communication system, and the method includes at least one of the following steps.

Step 5101, when a first condition is met, a terminal triggers first information.

Step 5102, when a second condition is met, the terminal cancels the first information.

Optionally, after the terminal triggers the first information, the method further includes:
sending, by the terminal, the first information to the network device.

Optionally, the first condition includes at least one of:
the terminal detecting that at least one first resource triggers an SL consistent LBT failure;
the terminal detecting that at least one first resource triggers an SL consistent LBT failure and the SL consistent LBT failure is not cancelled;
there existing no uplink resource available for sending second information, where the second information indicates that at least one first resource triggers an SL consistent LBT failure;
the terminal being in a first mode, where the first mode is the network device allocates a resource to the terminal; or
the terminal being in a second mode and being in an RRC connected state, where the second mode is the terminal autonomously determines a resource.

Optionally, the second condition includes at least one of:
the second information being sent successfully, where the second information indicates that the at least one first resource triggers the SL consistent LBT failure; or
the SL consistent LBT failure triggered by the at least one first resource being cancelled.

Optionally, triggering by the terminal the first information includes:
triggering, by the terminal, corresponding first information respectively for at least one first resource meeting the first condition.

Optionally, canceling by the terminal the first information includes:
cancelling, by the terminal, the corresponding first information triggered by a first resource meeting the second condition.

Optionally, sending, by the terminal, the first information includes:
sending, by the terminal, the corresponding first information respectively triggered by the at least one first resource.

Optionally, the method further includes:
starting by the terminal a first timer, where the first timer is a timer associated with the first information, and the first information is prohibited from being sent during a running state of the first timer.

Optionally, after the terminal cancels the first information, the method further includes:

Stopping, by the terminal, a first timer in a running state, where the first timer is a timer associated with the first information, and the first information is prohibited from being sent during the running state of the first timer.

Optionally, the first resource is used by the terminal for an SL communication.

Optionally, the first resource includes at least one of a RB set, a BWP, or a resource pool.

Optionally, the first information is an SR.

Optionally, the second information is an MAC CE, and the second information is carried by an MAC PDU.

Optionally, there existing no uplink resource available for sending the second information includes at least one of:
there existing no available uplink new transmission resource; or
there existing an available uplink new transmission resource, and the available uplink new transmission resource is unable to include the MAC CE and a sub-header of the MAC CE.

For optional implementations of step 5101 and step 5102, reference can be made to the steps in any embodiment or any multiple embodiments in the embodiments of FIGS. 2A-2C and FIGS. 3A-3C above, and other related parts in the embodiments involved in FIGS. 2A-2C and FIGS. 3A-3C.

In some embodiments, the above method may include the methods described in the above embodiments of the communication system, the terminal, the network device, etc., which will not be repeated here.

The communication method involved in the embodiments of the present disclosure may include at least one of steps S5101 to S5102. For example, step S5101 may be implemented as an independent embodiment, step S5102 may be implemented as an independent embodiment, and steps S5101+S5102 may be implemented as an independent embodiment, which is not limited in the present disclosure.

In the embodiments or examples, unless there is any contradiction, each step can be independent, arbitrarily combined or exchanged in order, the optional methods or optional examples can be arbitrarily combined, and can be arbitrarily combined with any steps of other embodiments or other examples.

The following are example introductions to the above methods.

Optional Example 1: If the SR is triggered by the consistent LBT failure of the SL of a BWP/resource pool/RB set, and the MAC PDU including the MAC CE indicating the consistent LBT failure of this BWP/resource pool/RB set is sent successfully, the SR is cancelled and the prohibit timer associated with this SR is stopped.

An example: a granularity of the SL consistent LBT failure detection is BWP. If the SR is triggered by the SL consistent LBT failure of the BWP, if the MAC PDU is sent successfully and the MAC PDU contains the MAC CE, and specifically this MAC CE is an SL consistent LBT failure MAC CE, which contains the SL consistent LBT failure indication of the BWP, the SR is cancelled and the sr-ProhibitTimer associated with this SR is stopped. For example, the MAC CE may indicate the consistent LBT failure state of the BWP via a bitmap, for example, the bit corresponding to the BWP is 1.

An example: a granularity of the SL consistent LBT failure detection is resource pool, and "BWP" in the above example is replaced by "resource pool".

An example: a granularity of the SL consistent LBT failure detection is a RB set, and the "BWP" in the above example is replaced by "RB set".

Optional Example 2: If the SR is triggered due to the SL consistent LBT failure of a BWP/resource pool/RB set, and the SL consistent LBT failure of the BWP/resource pool/RB set is cancelled, the SR is cancelled and the prohibit timer associated with this SR is stopped.

An example: a granularity of the SL consistent LBT failure detection is BWP. If the SR is triggered due to the SL consistent LBT failure of the BWP, and the SL consistent LBT failure of this BWP is cancelled, the SR is cancelled and the prohibition timer associated with the SR is stopped.

An example: a granularity of SL consistent LBT failure detection is resource pool. If the SR is triggered due to the SL consistent LBT failure of the resource pool, and the SL consistent LBT failure of this resource pool is canceled, the SR is cancelled and the prohibit timer associated with this SR is stopped.

An example: a granularity of SL consistent LBT failure detection is RB set. If the SR is triggered due to the SL consistent LBT failure of the RB set, and the SL consistent LBT failure of this RB set is cancelled, the SR is cancelled and the prohibit timer associated with the SR is stopped.

Optional Example 3: If the SL Consistent LBT failure is triggered in at least one BWP/resource pool/RB set and is not cancelled, and if there is no available resource, an SL Consistent LBT failure MAC CE is sent and an SR is triggered.

An example: a granularity of the SL consistent LBT failure detection is BWP. If the SL consistent LBT failure is triggered in at least one BWP and is not cancelled, and if there is no available resource to send the SL consistent LBT failure MAC CE, the SR is triggered.

An example: a granularity of the SL consistent LBT failure detection is resource pool. If the SL consistent LBT failure is triggered in at least one resource pool and is not cancelled, and if there is no available resource, the SL consistent LBT failure MAC CE is sent and the SR is triggered.

An example: a granularity of the SL consistent LBT failure detection is RB set. If the SL consistent LBT failure is triggered in at least one RB set and is not cancelled, and if there is no available resource to send the SL consistent LBT failure MAC CE, the SR is triggered.

An example: non-existence of the available resource specifically means that there is no uplink new transmission resource, or there is an uplink new transmission resource but a size of the uplink new transmission resources is insufficient to include the SL consistent LBT failure MAC CE and a sub-header of the SL consistent LBT failure MAC CE.

The embodiments of the present disclosure further provide an apparatus for implementing any of the above methods. For example, an apparatus is provided, which includes units or modules for implementing respective steps executed by the terminal in any of the above methods. For another example, another apparatus is provided, which includes units or modules for implementing respective steps executed by the network device (such as an access network device, a core network function node, a core network device, etc.) in any of the above methods.

It should be understood that the division of the units or modules in the above apparatus is only a division of logical functions, and in actual implementation, they can be fully or partially integrated into one physical entity, or they can be physically separated. In addition, the units or modules in the apparatus can be implemented in the form of processor-calling software: for example, the apparatus includes a processor, the processor is connected to a memory, instructions are stored in the memory, and the processor calls the instructions stored in the memory to implement any of the above methods or implement the functions of the units or modules of the above-mentioned apparatus, where the processor is, for example, a general-purpose processor, such as a central processing unit (CPU) or a microprocessor, and the memory is a memory inside the apparatus or a memory outside the apparatus. Alternatively, the units or modules in the apparatus can be implemented in the form of hardware circuits, and the functions of some or all of the units or modules can be realized by designing the hardware circuits. The above-mentioned hardware circuits can be understood as at least one processor; for example, in one implementation, the above-mentioned hardware circuit is an application-specific integrated circuit (ASIC), and the functions of some or all of the above units or modules are realized by designing the logical relationship of the elements in the circuit. For example, in another implementation, the above-mentioned hardware circuit may be implemented by a programmable logic device (PLD), taking a field programmable gate array (FPGA) as an example, which may include a large number of logic gate circuits, and the connection relationship between the logic gate circuits is configured by a configuration file, thereby realizing the functions of some or all of the above units or modules. All units or modules of the above apparatus may be implemented entirely by processor-calling software, or entirely by hardware circuits, or partially by processor-calling software and the rest by hardware circuits.

In the embodiments of the present disclosure, the processor is a circuit with signal processing capabilities. In an implementation, the processor may be a circuit with instruction reading and execution capabilities, such as a central processing unit (CPU), a microprocessor, a graphics processing unit (GPU) (which can be understood as a microprocessor), or a digital signal processor (DSP). In another implementation, the processor may implement certain functions through the logical relationship of hardware circuits, and the logical relationship of the above hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which may be understood as ASIC, such as a neural network processing unit (NPU), a tensor processing unit (TPU), a deep learning processing unit (DPU), etc.

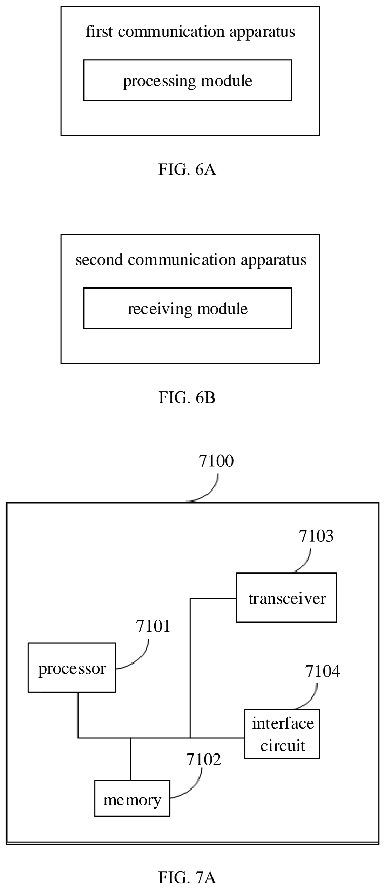

FIG. 6A is a schematic structural diagram of a first communication apparatus proposed in an embodiment of the present disclosure. As shown in FIG. 6A, the first communication apparatus includes: a processing module, configured to trigger first information in response to meeting a first condition, where the first information is used to request an uplink resource. Optionally, the processing module is further configured to cancel the first information in response to meeting a second condition. Optionally, the above-mentioned processing module is configured to execute the steps related to "triggering the first information" and "canceling the first information" executed by the terminal 101 in any of the above methods, which will not be repeated here. Optionally, the first communication apparatus also includes at least one of a sending module and a receiving module, the sending module is configured to execute the steps related to sending performed by the terminal 101 in any of the above methods, and the receiving module is configured to execute the steps related to receiving performed by the terminal 101 in any of the above methods, which will not be repeated here.

FIG. 6B is a schematic structural diagram of a second communication apparatus proposed in an embodiment of the present disclosure. As shown in FIG. 6B, the second communication apparatus includes: a receiving module, configured to receive first information, where the first information is used to request an uplink resource, the first information is triggered by a terminal, and a triggering condition of the first information is meeting a first condition. Optionally, the above-mentioned receiving module is configured to execute the steps related to "receiving the first information" performed by the network device 102 in any of the above methods, which will not be repeated here. Optionally, the second communication apparatus also includes at least one of a determination module and a sending module, and the above-mentioned determination module is configured to execute the steps related to determination performed by the network device 102 in any of the above methods, and the above-mentioned sending module is configured to execute the steps related to sending performed by the network device 102 in any of the above methods, which will not be repeated here.

FIG. 7A is a schematic structural diagram of a communication device 7100 proposed in an embodiment of the present disclosure. The communication device 7100 may be a network device (such as an access network device, a core network device, etc.), or a terminal (such as a user device, etc.), or a chip, chip system, or processor that supports the network device to implement any of the above methods, or a chip, chip system, or processor that supports the terminal to implement any of the above methods. The communication device 7100 may be configured to implement the methods described in the above method embodiments. For details, reference can be made to the descriptions in the above method embodiments.

As shown in FIG. 7A, the communication device 7100 includes at least one processor 7101. The processor 7101 may be a general-purpose processor or a dedicated processor, for example, a baseband processor or a central processor. The baseband processor may be configured to process communication protocols and communication data, and the central processing unit may be configured to control communication devices (such as base stations, baseband chips, terminal devices, terminal device chips, DU or CU, etc.), execute programs, and process program data. The processor 7101 is configured to call instructions to enable the communication device 7100 to execute any of the above methods.

In some embodiments, the communications device 7100 also includes at least one memory 7102 for storing instructions. Optionally, all or part of the memory 7102 may also be located outside the communication device 7100.

In some embodiments, the communication device 7100 also includes at least one transceiver 7103. When the communication device 7100 includes at least one transceiver 7103, the communication steps, such as sending and receiving in the above methods, are performed by the transceiver 7103, and the other steps are performed by the processor 7101.

In some embodiments, the transceiver may include a receiver and a transmitter, and the receiver and the transmitter may be separate or integrated. Optionally, terms such as transceiver, transceiving unit, transceiving machine, and transceiving circuit can be replaced with each other, terms such as transmitter, transmitting unit, transmitting machine, and transmitting circuit can be replaced with each other, and terms such as receiver, receiving unit, receiving machine, and receiving circuit can be replaced with each other.

Optionally, the communication device 7100 further includes at least one interface circuit 7104, which is connected to the memory 7102. The interface circuit 7104 may be used to receive signals from the memory 7102 or other devices, and may be used to send signals to the memory 7102 or other devices. For example, the interface circuit 7104 may read instructions stored in the memory 7102 and send the instructions to the processor 7101.

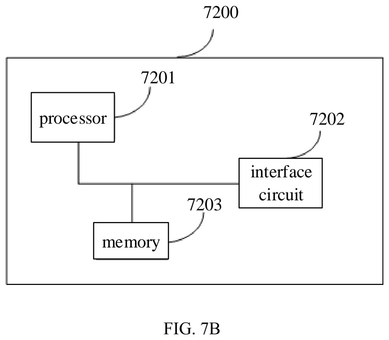

The communication device 7100 described in the above embodiments may be a network device or a terminal, but the scope of the communication device 7100 described in the present disclosure is not limited to this, and the structure of the communication device 7100 may not be limited to FIG. 7 a. The communication device may be a stand-alone device or may be part of a larger device. For example, the communication device may be: 1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 7B is a schematic structural diagram of a chip 7200 according to an embodiment of the present disclosure. In a case where the communication device 7100 may be a chip or a chip system, reference can be made to the structural diagram of the chip 7200 shown in FIG. 7B, which is not limited in the present disclosure.

The chip 7200 includes at least one processor 7201, and the processor 7201 is configured to call instructions so that the chip 7200 executes any of the above methods.

In some embodiments, the chip 7200 further includes at least one interface circuit 7202, which is connected to the memory 7203. The interface circuit 7202 may be configured to receive signals from the memory 7203 or other devices, and may be configured to send signals to the memory 7203 or other devices. For example, the interface circuit 7202 may read instructions stored in the memory 7203 and send the instructions to the processor 7201. Optionally, terms such as interface circuit, interface, transceiver pin, and transceiver may be used interchangeably.

In some embodiments, the chip 7200 also includes at least one memory 7203 for storing instructions. Optionally, all or part of the memory 7203 may be outside chip 7200.

The present disclosure also proposes a storage medium having stored instructions. When the instructions are executed on the communication device 7100, the communication device 7100 executes any of the above methods. Optionally, the above storage medium is an electronic storage medium. Optionally, the above storage medium is a computer-readable storage medium, which is not limited in the present disclosure, and the storage medium may also be a storage medium readable by other devices. Optionally, the above storage medium may be a non-transitory storage medium, which is not limited in the present disclosure, and the storage medium may also be a transitory storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to perform any one of the above methods.

In the above embodiments, all or part of them can be implemented by software, hardware, firmware or any combination thereof. When implemented using software, all or part of the implementation may be in the form of a computer program product. The computer program product includes one or more computer programs. When the computer program is loaded and executed on a computer, the processes or functions described in the embodiments of the present disclosure are generated in whole or in part. The computer may be a general purpose computer, a dedicated computer, a computer network, or other programmable device. The computer program may be stored in a computer-readable storage medium or transmitted from one computer-readable storage medium to another computer-readable storage medium. For example, the computer program may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device, such as a server or a data center that includes one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art will appreciate that the units and algorithm steps of each example described in combination with the embodiments of the present disclosure can be implemented by electronic hardware, or a combination of computer software and electronic hardware. Whether these functions are performed in hardware or software depends on the specific application and design constraints of the technical solution. Those skilled in the art may use different methods to implement the described functions for each specific application, but such implementation should not be considered to be beyond the scope of the present disclosure.

Those skilled in the art will clearly understand that, for the convenience and brevity of description, for the specific working processes of the systems, devices and units described above reference can be made to the corresponding processes in the aforementioned method embodiments and details will not be repeated here.

The above description is only specific embodiments of the present disclosure, but the protection scope of the present disclosure is not limited thereto. Any technician familiar with the technical field can easily think of changes or replacements within the technical scope disclosed in the present disclosure, and they should all be covered by the protection scope of the present disclosure. Therefore, the protection scope of the present disclosure should be based on the protection scope of the claims.

## Claims

1. A communication method, performed by a terminal, comprising at least one of:
triggering first information in response to meeting a first condition, wherein the first information is used to request an uplink resource; or
cancelling the first information in response to meeting a second condition.

2. The method according to claim 1, wherein after triggering the first information, the method further comprises:
sending the first information.

3. The method according to claim 1 or 2, wherein the first condition comprises at least one of:
the terminal detecting that at least one first resource triggers a sidelink (SL) consistent listen-before-talk (LBT) failure;
the terminal detecting that at least one first resource triggers an SL consistent LBT failure and the SL consistent LBT failure is not cancelled;
there existing no uplink resource available for sending second information, wherein the second information indicates that at least one first resource triggers an SL consistent LBT failure;
the terminal being in a first mode, wherein the first mode is a network device allocates a resource to the terminal; or
the terminal being in a second mode and being in a radio resource control (RRC) connected state, wherein the second mode is the terminal autonomously determines a resource.

4. The method according to any one of claims 1 to 3, wherein the second condition comprises at least one of:
the second information being sent successfully, wherein the second information indicates that the at least one first resource triggers the SL consistent LBT failure; or
the SL consistent LBT failure triggered by the at least one first resource being cancelled.

5. The method according to any one of claims 1 to 4, wherein triggering the first information includes:
triggering corresponding first information respectively for at least one first resource meeting the first condition.

6. The method according to any one of claims 1 to 5, wherein cancelling the first information comprises:
cancelling the corresponding first information triggered by a first resource meeting the second condition.

7. The method according to any one of claims 2 to 6, wherein sending the first information comprises:
sending the corresponding first information respectively triggered by the at least one first resource.

8. The method according to any one of claims 2 to 7, further comprising:
starting a first timer, wherein the first timer is a timer associated with the first information, and the first information is prohibited from being sent during a running state of the first timer.

9. The method according to any one of claims 1 to 8, wherein after cancelling the first information, the method further comprises:
stopping a first timer in a running state, wherein the first timer is a timer associated with the first information, and the first information is prohibited from being sent during the running state of the first timer.

10. The method according to any one of claims 3 to 9, wherein the at least one first resource is used by the terminal for an SL communication.

11. The method according to any one of claims 3 to 10, wherein the first resource comprises at least one of a resource block (RB) set, a bandwidth part (BWP), or a resource pool.

12. The method according to any one of claims 1 to 11, wherein the first information is a scheduling request (SR).

13. The method according to any one of claims 3 to 12, wherein the second information is a media access control control element (MAC CE), and the second information is carried by a media access control protocol data unit (MAC PDU).

14. The method according to claim 13, wherein there existing no uplink resource available for sending the second information comprises at least one of:
there existing no available uplink new transmission resource; or
there existing an available uplink new transmission resource, and the available uplink new transmission resource is unable to comprise the MAC CE and a sub-header of the MAC CE.

15. A communication method, performed by a network device, comprising:
receiving first information, wherein the first information is used to request an uplink resource, the first information is triggered by a terminal, and a triggering condition of the first information is meeting a first condition.

16. The method according to claim 15, wherein the first condition comprises at least one of:
the terminal detecting that at least one first resource triggers a sidelink (SL) consistent listen-before-talk (LBT) failure;
the terminal detecting that at least one first resource triggers an SL consistent LBT failure and the SL consistent LBT failure is not cancelled;
there existing no uplink resource available for sending second information, wherein the second information indicates that at least one first resource triggers an SL consistent LBT failure;
the terminal being in a first mode, wherein the first mode is the network device allocates a resource to the terminal; or
the terminal being in a second mode and being in a radio resource control (RRC) connected state, wherein the second mode is the terminal autonomously determines a resource.

17. The method according to claim 15 or 16, wherein receiving the first information comprises:
receiving corresponding first information respectively triggered by the at least one first resource.

18. The method according to claim 16 or 17, wherein the at least one first resource is used by the terminal for an SL communication.

19. The method according to any one of claims 16 to 18, wherein the first resource comprises at least one of a resource block (RB) set, a bandwidth part (BWP), or a resource pool.

20. The method according to any one of claims 15 to 19, wherein the first information is a scheduling request (SR).

21. The method according to any one of claims 16-20, wherein the second information is a media access control control element (MAC CE), and the second information is carried by a media access control protocol data unit (MAC PDU).

22. The method according to claim 21, wherein there existing no uplink resource available for sending the second information comprises at least one of:
there existing no available uplink new transmission resource; or
there existing an available uplink new transmission resource, and the available uplink new transmission resource is unable to comprise the MAC CE and a sub-header of the MAC CE.

23. A communication method, performed by a communication system comprising a terminal and a network device, the method comprising at least one of:
triggering, by the terminal, first information, in response to meeting a first condition, wherein the first information is used to request an uplink resource; or
cancelling, by the terminal, the first information in response to meeting a second condition.

24. The method according to claim 23, wherein after triggering by the terminal the first information, the method further comprises:
sending, by the terminal, the first information to the network device.

25. The method according to claim 23 or 24, wherein the first condition comprises at least one of:
the terminal detecting that at least one first resource triggers a sidelink (SL) consistent listen-before-talk (LBT) failure;
the terminal detecting that at least one first resource triggers an SL consistent LBT failure and the SL consistent LBT failure is not cancelled;
there existing no uplink resource available for sending second information, wherein the second information indicates that at least one first resource triggers an SL consistent LBT failure;
the terminal being in a first mode, wherein the first mode is the network device allocates a resource to the terminal; or
the terminal being in a second mode and being in a radio resource control (RRC) connected state, wherein the second mode is the terminal autonomously determines a resource.

26. The method according to any one of claims 23 to 25, wherein the second condition comprises at least one of:
the second information being sent successfully, wherein the second information indicates that the at least one first resource triggers the SL consistent LBT failure; or
the SL consistent LBT failure triggered by the at least one first resource being cancelled.

27. A first communication apparatus, comprising:
a processing module, configured to trigger first information in response to meeting a first condition, wherein the first information is used to request an uplink resource;
the processing module being further configured to cancel the first information in response to meeting a second condition.

28. A second communication apparatus, comprising:
a receiving module, configured to receive first information, wherein the first information is used to request an uplink resource, the first information is triggered by a terminal, and a triggering condition of the first information is meeting a first condition.

29. A communication device, comprising:
at least one processor;
wherein the at least one processor is configured to call instructions to enable the communication device to perform the communication method according to any one of claims 1-14 or 15-22.

30. A communication system, comprising a terminal and a network device, wherein the terminal is configured to implement the communication method according to any one of claims 1 to 14, and the network device is configured to implement the communication method according to any one of claims 15 to 22.

31. A storage medium storing instructions, wherein when the instructions are executed on a communication device, the communication device is caused to execute the communication method according to any one of claims 1-14 or 15-22.
